# EUROPEAN PATENT SPECIFICATION

(11) **EP 3 535 133 B1**
(45) Date of publication and mention of the grant of the patent: **30.09.2020**
(21) Application number: 17746365.0
(22) Date of filing: 15.06.2017
(51) Int. Cl.: B42D 25/324, B42D 25/328, B42D 25/36, B42D 25/373, B42D 25/23, B42D 25/24, B42D 25/29, B42D 25/425, B42D 25/45, G02B 5/09

(54) **OPTICAL VARIABLE DEVICE**
OPTISCHE VARIABLE VORRICHTUNG
DISPOSITIF VARIABLE OPTIQUE

(30) Priority: 03.05.2017 BG 11249717
(43) Date of publication of application: 11.09.2019
(73) Proprietor: Demax - Holograms AD, 1138 Sofia (BG)
(72) Inventor: MONOVSKI, Valentin Konstantinov, 1799 Sofia (BG); STOILOV, Georgi Ivanov, 1326 Sofia (BG); DOBREV, Mario Rumenov, 1164 Sofia (BG); IVANOVSKYI, Andrii, 1750 Sofia (BG); POGAN, Ignat, 1407 Sofia (BG); BALDZHIEV, Angel Georgiev, 1000 Sofia (BG); LASKOV, Evgeniy Anastasov, 1517 Sofia (BG); TONCHEV, Dimitar Antonov, 1574 Sofia (BG); DELCHEV, Ivo Rumenov, 1574 Sofia (BG)
(74) Representative: Pakidanska, Ivanka Slavcheva
(86) International application number: PCT/BG2017/050003
(87) International publication number: WO 2018/201208

(56) References cited:
- WO-A1-2006/013215
- WO-A1-2017/017418
- AU-B2- 2015 243 835
- US-A1- 2006 056 065
- US-A1- 2013 052 373
- US-A1- 2015 224 809
- US-A1- 2017 106 690

## Description

### TECHNICAL FIELD OF THE INVENTION

The invention refers to an optical variable device, which forms a three-dimensional colour image of an arbitrary object and can be used as a security element for authentication of articles and documents as well as a decorative element.

### PRIOR ART

An optical variable device is a device, which under different illumination and observation conditions (illumination angle, observation angle, spectrum of illuminating source, etc.) reconstructs a different image and may also display various optical effects. This makes it appropriate for use as a decorative element as well as a security element against counterfeiting of goods, ID documents, banknotes, securities, credit cards and so on.

Known is an optical variable device [US 2006/0056065 A1], which includes a relief diffractive structure in the form of grooves with a stepped profile in the form of Fresnel diffractive zones reconstructing a three-dimensional image of an arbitrary object. When illuminated with white light this optical device accurately reconstructs the shape of the object, but not its colour. When the object is matt, the reconstructed image is in various shades of grey, and when the object has a smooth surface, the reconstructed image has iridescent colouring due to the diffraction from the periodical structure of optical device. In order to reconstruct a three-dimensional image of an arbitrary object in particular colour, the known optical device is located between two layers, at least one of which is coloured with colour paint or pigment. When illuminated with white light the three-dimensional image of an arbitrary object reconstructed by this optical device is completely coloured in one particular colour, no relevant to the actual colour of the object. The known optical variable device does not allow a high quality reconstruction of a three-dimensional colour image of an object in more than one colour. It limits the artistic and aesthetic characteristics of the design. Moreover, for reconstruction of a colour image it is necessary to use colour lacquers or foils, which makes the optical device more expensive. The use of colour layers requires supplementary control in the production process, which additionally increases the price of the end product.

US 2017/106690 A1 discloses a hybrid security device for security documents and tokens comprising: a substrate; a first microstructure for a first optical variable device supported on the substrate in a first region; and a second microstructure for a second optical variable device supported on the substrate in a second region; said first and second regions being mutually interlaced or interspersed in at least one area; said first microstructure having a height profile differing from that of the second microstructure by more than 0.5 microns. The disclosed device does not reconstruct 3D image of high resolution and sharpness of an arbitrary object coloured in various pre-selected colours, including non-spectral colours visible within a wide angle of observation in first order. Besides, the method of manufacturing of said device includes a number of stages of resist coating and exposure. Being time and resource consuming this process is of low productivity and is not suitable for mass production.

US 2015/224809 A1 reveals a security element, in particular in the form of multilayer film body, with a first area that is transparent in transmitted light, wherein the security element has a substrate which has, in the first area, one or more transmissive diffraction structures which display one or more optical security features when observed in transmitted light. When illuminated with white light this optical security element displays in transmission a 2D image visible within a narrow angle of observation with colour-change and dynamic effects when tilted and/or turned.

AU 2015 243835B2 discloses an optical security component intended for being observed under direct reflection, comprising a structure engraved on a layer of a material having a refraction index n₂, a thin layer of dielectric material having a refraction index n₁, other than n₂, deposited on the structure, and a layer of a material having a refraction index n₀, other than n₁, encapsulating the coated structure of the thin layer. The structure has a first pattern modulated by a second pattern in such a way that: in at least one first region the first pattern comprises a bas-relief with a first set of facets, the shape of which are determined such as to generate at least one first concave or convex cylindrical reflective element, and the second pattern forms a first subwavelength grating acting after depositing the thin layer and encapsulating the structure, as a first wavelength-subtractive filter; in at least one second region, the first pattern comprises a low-relief with a second set of facets whose shapes are determined so as to generate at least one second concave or convex cylindrical reflective element, and the second pattern forms a second subwavelength grating acting after depositing the thin layer and encapsulating the structure, as a second wavelength-subtractive filter, separate from the first one. This optical element does not reconstruct a 3 D image of an object. When illuminated with white light, it displays in zero-order a dynamic visual effect of "running bright bands" visible within a narrow angle of observation.

US 2013/0052373 A1 reveals an optical authentication component visible in reflection, comprising at least one structure imprinted on a polymer substrate of index n₀ deposited on the structure, a thin layer, made of a dielectric material having a refractive index n₁ different to n₀ deposited on said structure, and a layer made of a material having an index n₂ similar to n₀ encapsulated the structure coated with the thin layer. Said structure comprises a first pattern modulated by a second pattern. The first pattern is a bas-relief comprising an array of facets the shape of which are defined in order to simulate an image in relief of the object in relief. The second pattern is a periodic grating defined in order to modulate the first pattern in order to produce after the thin layer has been deposited a first colour at a first viewing angle and a second colour at a second viewing angle obtained by azimuthal rotation of the optical authentication component. When illuminated with white light, this optical authentication component shows image with iridescent colours in high diffractive orders (±1, ±2, ...) which is observed at sharp angle of view. An image in non-spectral and black colours could be observed at specular reflection only. This optical component cannot reconstruct an image of an object in non-spectral colours, brown for instance, visible in a wide range of observation angles. Additionally, the brightness of this optical authentication component is low because of low reflectance coefficient of polymer with dielectric coating. This results in a low-contrast image when the optical authentication component is applied over a light substrate or white paper or plastic. To overcome this shortcoming and increase the contrast of the image an additional opaque dark layer is applied which increases the cost of the disclosed authentication component.

### Terms and definitions

The terms and definitions in this invention have the following meaning.

*Visible spectrum* - the range of wavelength of the light *λ* from 380 nm to 750 nm.

*Optical path length* - the product of the physical length and the refractive index of the medium through which the light propagates.

*Spectral colour* - a colour with one dominating wavelength from the visible spectrum of light.

*Non-spectral colour* - a colour obtained by mixing two or more spectral colours, as a result of which a low-saturation colour is obtained, like brown, violet, purple, etc.

*Black colour* - a colour characterized by the following properties:
- Uniform spectral characteristics in the visible spectrum, in which the spectral components deviate from the average intensity with no more than 10%;
- The light intensity from an image in black colour is no more than 5% of the intensity of the light from the surrounding images.

*Illumination with white light* - illumination of the optical variable device with natural directed non-polarized light.

### SUMMARY OF INVENTION

The objective of the present invention is to create an optical variable device which when illuminated with white light reconstructs accurately a three-dimensional image of an arbitrary object coloured in various pre-selected colours, including non-spectral colours, as well as black colour, so that the reconstructed image is of high resolution and sharpness and is visible within a wide range of the angle of observation, and the optical variable device is technologically suitable for mass production. Another objective of the invention is to create an optical security element for authentication of articles and documents reconstructing an accurate three-dimensional image of an arbitrary object in various colours, including black.

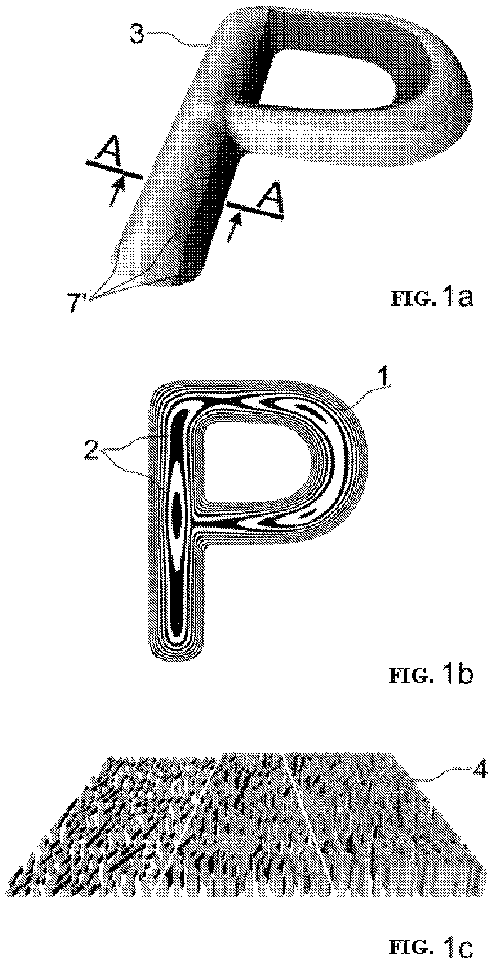

The assignment is solved as defined in claim 1 by creating an optical variable device including a first relief diffractive structure consisting of grooves in the form of Fresnel diffractive zones from an arbitrary object and reconstructing a three-dimensional image of said object through changes in the direction of the grooves and the distance between them (Fig.1a, 1b). If specific heights and number of steps in this diffractive structure are set up, said diffractive structure will reconstruct a three-dimensional image of the object with the right colours, but its shape will be distorted - at places the object will be thicker or thinner.

To avoid this effect, a second relief diffractive structure is added mathematically to the first relief diffractive structure. Said second relief diffractive structure consists of areas comprising depressions different in shape, size and direction and with distance *d* between them, and the borders of said areas coincide with the borders of the areas in the same colour of the original object (Fig. 1c). The distance *d* between the depressions determines the diffraction angle of the light, and thus the respective colour is displayed. For practical reasons - convenience in observation - the distance d for the light of the visible spectrum is set between 1 µm and 10µm according to the invention. The range of values for the distance *d* determines the range of the observation angle for the optical variable device. The reconstructed image becomes closer to specular reflection with the increase of the distance *d*, and the specular glare dazzles the observer and prevents him from perceiving a reconstructed image at *d*>10µm. The profile of the depressions is formed by *N* in number discrete planes, where *N* is between 2 and 7, and height *hᵢ* of said planes is between 0.02µm and 1µm. The distance *d* between the depressions, the number *N* and the heights *hᵢ* of the planes are the same in each area and their values are determined by the colour of the object in the respective area. Thus, the diffractive structure may work as a spectral filter, which intensifies the light with a specific wavelength and reduces the intensity of light with other wavelengths depending on the number and the height of the planes.

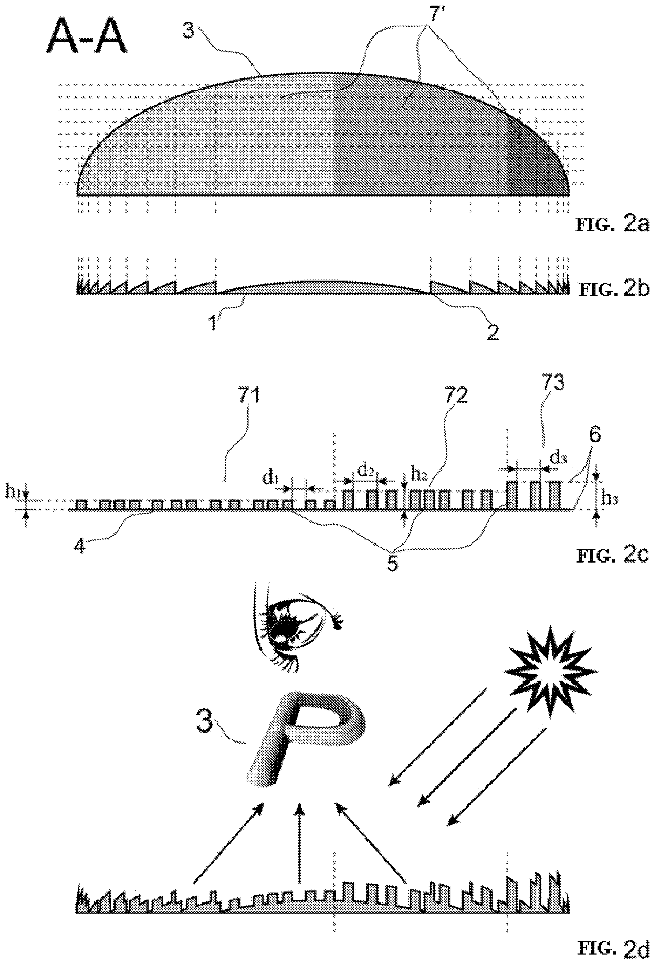

When the depressions profile is formed only by two discrete planes, i.e. a binary profile (see Fig.2c), the diffractive structure provides only 0 and ±1 diffraction orders of light. With the increase in the number of planes, higher diffraction orders appear and the spectral characteristics change - the light from the various orders mixes, thus the colour becomes whiter, and the palette of accessible colours decreases.

It is possible that the discrete planes form a stepped profile, and the height of the steps *sᵢ* in each area with equal colour is the same and depends on the colour of the object in the respective area. Such colouring diffractive structure is with a directed pattern of diffraction, i.e. the light diffracts only in one order. This increases the brightness of diffraction from the colouring structure and allows the observation of various colours under various observation conditions. Thus, for instance, the object may have various colouring in +1 and -1 order of diffraction from the optical variable device.

The depressions can have an oblong shape and can form a diffractive grating, the ratio between the length *L* and the width *b* of said depressions being ≥10.

The optical variable device can be of metal or of transparent polymer material. A metal coating, most frequently aluminium, can be deposited over the polymer material to increase reflection efficiency.

A coating of transparent dielectric with a refractive index ≥1.8 can be deposited before the metal coating to obtain special spectrum characteristics; zinc sulphide (ZnS) is used most frequently.

The optical variable device can be of transparent polymer material with a transparent dielectric coating, most frequently ZnS. This optical device reconstructs a colour three-dimensional image of the object at transmission or reflection while some additional visual information can be seen under through it. The optical variable device can be formed in an embossible layer, and a release layer and a base layer are consecutively placed over said embossible layer. All layers are of transparent polymer materials. Usually the embossible layer is polymer acrylate; the release layer is wax and the base layer - polyethylene terephthalate (PET). A coating is deposited over the optical variable device; said coating can be of metal, most frequently aluminium, of dielectric, most frequently ZnS, or of metal and dielectric, the latter being on the side to the observer. A self-adhesive layer can be placed over the coating. This optical device is suitable for use as a security element in form of a self-adhesive label (vignettes, label stickers, goods, etc.).

The optical variable device can be formed in an embossible layer with consecutively placed over it a resistant layer for protection from mechanical and chemical impact, a release layer and a base layer. All layers are made of transparent polymer materials. Usually the embossible layer is polymer acrylate, the resistant layer is hard polymer, and most frequently a mixture of acrylates with wax, the release layer is wax and the base layer - PET. A coating is deposited over the optical variable device. It can be metal, most frequently aluminium, dielectric, most frequently ZnS or metal and dielectric, the latter being on the side to the observer. There is a layer of heat-activated adhesive over the coating. This optical device is suitable for use as a security element for ID documents, banknotes and other securities.

The advantage of the optical variable device according to the invention is that it accurately reconstructs a three-dimensional colour image of an arbitrary object in various pre-selected colours, including non-spectral colours black colour too, and the reconstructed image is of high resolution and sharpness and is visible from a wide range of observation angles. Moreover, upon observation under various angles, it allows the observation of dynamic colour effects - at tilting or rotation of the optical device, consistent images in different colours are observed. The optical device according to the invention is suitable for mass manufacturing. It can be serially produced as a roll with holographic stickers or on hot-stamping foil and is very suitable for use as security elements for authentication of goods, ID documents and securities.

### BRIEF DESCRIPTION OF DRAWINGS

The invention is further illustrated by the accompanying drawings which serve to explain the principles of the invention without limiting its disclosure. The embodiment of Fig. 4a to Fig. 4e does not fall within the scope of the caims:
Fig. 1a) is an axonometric view of a three-dimensional object with three areas in different colours;
Fig. 1b) is a view from above of the first relief diffractive structure of an optical variable device reconstructing the object from Fig. 1a;
Fig. 1c) is an axonometric view of the second relief diffractive structure of an optical variable device reconstructing the object from Fig. 1a;
Fig. 2a) is a cross section of A-A of the three-dimensional object from Fig. 1a;
Fig. 2b) is a cross section of the first relief diffractive structure of an optical variable device, reconstructing the object from Fig. 1a;
Fig. 2c) is a cross section of the second relief diffractive structure with a binary profile of an optical variable device, reconstructing the three-dimensional object from Fig. 1a;
Fig. 2d) is a cross section of an optical variable device reconstructing at reflection the object from Fig. 1a;
Fig. 3a) is a cross section of A-A of the three-dimensional object from Fig. 1a;
Fig. 3b) is a cross section of the first relief diffractive structure of an optical variable device, reconstructing the object from Fig. 1a;
Fig. 3c) is a cross section of an alternative realization of the second relief diffractive structure of an optical variable device, reconstructing the object from Fig. 1a;
Fig. 3d) is a cross section of another embodiment of an optical variable device reconstructing at transmission the object from Fig. 1a in various colours according to on the angle of observation;
Fig. 4a) is an axonometric view of a three-dimensional object in black colour;
Fig. 4b) is a cross section of B-B of the three-dimensional object from Fig. 4a;
Fig. 4c) is a cross section of the first relief diffractive structure (1) of an optical variable device, reconstructing the three-dimensional object from Fig. 1a.
Fig. 4d) is an axonometric view of an alternative realization of the second relief diffractive structure in the form of a two-dimensional matrix with oblong depressions with *L* ≥10 *b.*
Fig. 4e) is a cross section of an optical variable device reconstructing at reflection the object from Fig. 4a;
Fig. 5a) is a cross section of A-A of the three-dimensional object from Fig. 1a;
Fig. 5b) is a cross section of the first relief diffractive structure of an optical variable device reconstructing the object from Fig. 1a;
Fig. 5c) is an axonometric view of an alternative realization of the second relief diffractive structure with oblong depressions;
Fig. 5d) is a cross section of another embodiment of an optical variable device reconstructing at reflection the object from Fig. 1a in various colours depending on the angle of observation;
Fig. 6a) is a multi-layer embodiment of an optical variable device in the form of a sticker;
Fig. 6b) is a multi-layer embodiment of an optical variable device in the form of hot-stamping foil.

### DESCRIPTION OF EMBODIMENTS

Figures 2a - 2d feature an embodiment of an optical variable device according to the invention formed on metal surface. It includes a first relief diffractive structure 1, consisting of grooves 2 in the form of Fresnel diffractive zones of the object 3, in this case graphic character P composed of three areas in different colours - for instance deep yellow, deep orange and deep violet.

A second relief diffractive structure 4 is mathematically added over the first relief diffractive structure 1. Said second relief diffractive structure 4 includes three areas 7 with a binary profile of the depressions 5, i.e. the number of planes *N*=2*,* and the heights *hᵢ* of the planes in each of the areas 7 are different - in the first area the height *h*₁ = 0.22µm, in the second area *h₂*= 0.265µm, and in the third area *h*₃=0.29µm. The distance d between the depressions 5 in all areas 7 is between 1µm and 5µm. The areas 7 of the second relief diffractive structure 4 correspond to the areas of object 3 with the same colour.

When this optical variable device is illuminated with white light as a result of light diffraction the observer may see at reflection a three-dimensional image of a graphic character P, which corresponds in shape and colour to the object 3. In this case, the reconstructed three-dimensional image appears in deep yellow, orange and violet colours and can be observed from a wide range of observational angles.

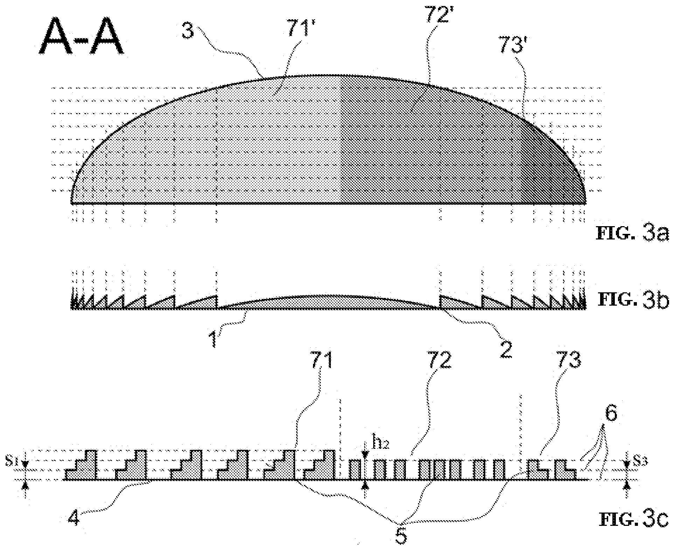

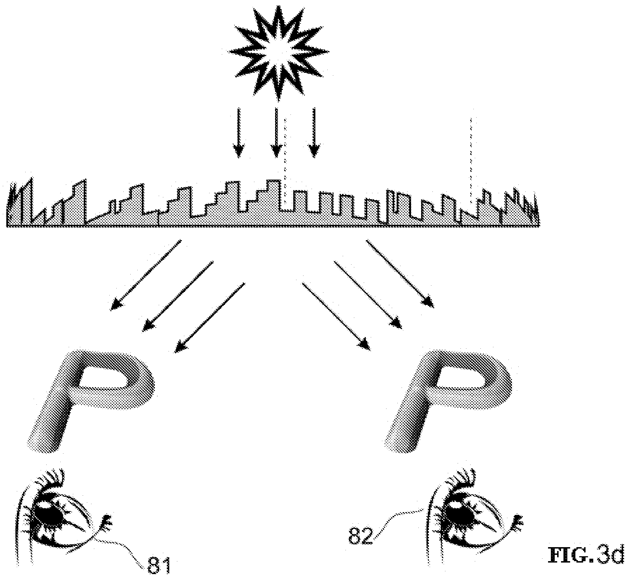

Figures 3a - 3c show another embodiment of the optical variable device according to the invention. It includes a first relief diffractive structure 1, consisting of grooves 2 in the form of Fresnel diffractive zones of the object 3, in this case a graphic character P composed of three areas in different colours - for instance light yellow, deep orange and light violet.

A second relief diffractive structure 4 is mathematically added over the first relief diffractive structure 1. Said second relief diffractive structure 4 includes three areas 71, 72 and 73 corresponding to areas 71', 72' and 73' of the object 3, which are in a different colour. In area 71 the depressions 5 have a stepped profile, the planes 6 are four in number, and the height *s* of the step is 0.145µm. In area 73 the depressions 5 have also a stepped profile, the planes 6 are three in number, and the height *s* of the step is 0.130µm. In the second area 72 the profile of depressions 5 is binary, i.e. the planes 6 are two in number, and the height *h* between them is 0.265µm. The distance *d* between the depressions 5 in all areas 7 is between 2µm and 10µm. The optical variable device is of transparent polymer foil with a coating of ZnS 0.06 µm thick. When illuminated with white light the observer can see at transmission a three-dimensional image of the object 3 with dynamic colour effects depending on the observation angle. When the observation angle is between 0° and 90° the observer will see a reconstructed three-dimensional image of the object 3 with colour areas coloured respectively in light yellow, deep orange and grey. At observation angle between 90° and 180° the observer will see the first area in black, the second in deep orange and the third in light violet.

If the coating is metal or the optical device is printed onto a metal surface, the same effect of the reconstructed image will be observed, but at reflection.

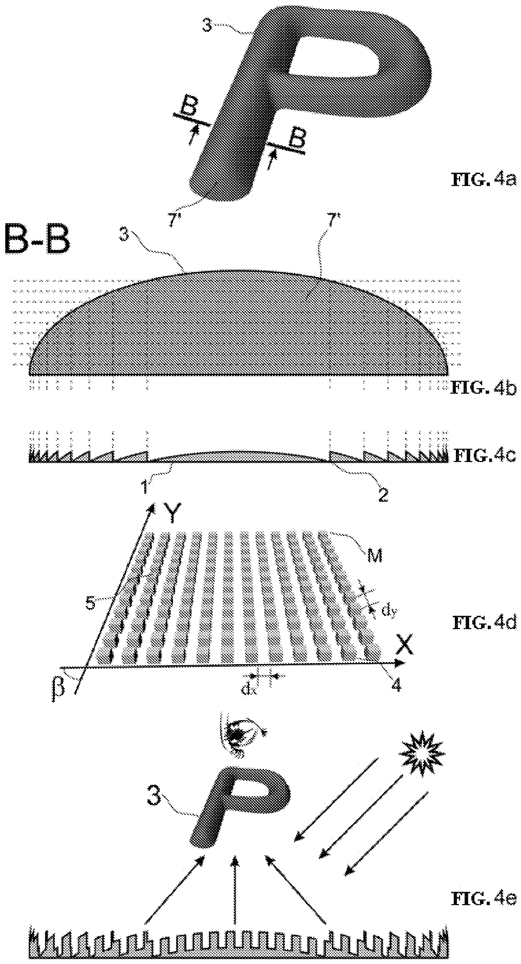

Figures 4a-4e shows an embodiment of the optical variable device that does not fall within the scope of the caims It includes a first relief diffractive structure 1, consisting of grooves 2 in the form of Fresnel diffractive zones of the object 3, in this case a graphic character P in black. A second relief diffractive structure 4 is mathematically added over the first relief diffractive structure 1. Said second relief diffractive structure 4 is in the form of a two-dimensional matrix *M* with a binary profile of the depressions 5, and the distances *d*ₓ and *d*_{y} between the depressions 5 respectively along the axes *X* and *Y* is 0.35µm, and the angle *β* between the axes *X* and *Y* of the matrix *M* is 90°. This optical device can be formed on a metal surface or can be of polymer with a metal or dielectric coating. When the optical device is illuminated with white light the observer can see at reflection a three-dimensional image, which corresponds in shape and colour to the object 3 - the graphic character P in black colour.

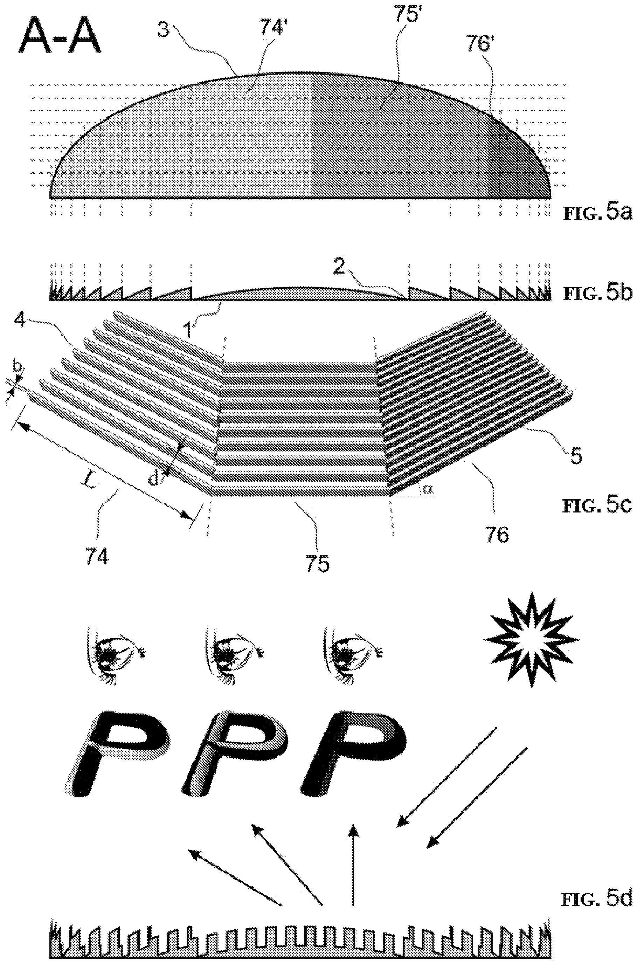

Figures 5a-5d features another embodiment of the optical variable device according to the invention. It includes a first relief diffractive structure 1, consisting of grooves 2 in the form of Fresnel diffractive zones of the object 3, in this case a graphic character P from Fig.1a. Said object 3 is composed of three areas in different colours. On the first relief diffractive structure 1 a second relief diffractive structure 4 is mathematically added in the form of a diffractive grating consisting of oblong depressions 5. Said diffractive grating includes three areas 74, 75 and 76, corresponding to the respective areas 74', 75' and 76' of the object 3 in the same colour. Area 74 consists of a diffractive grating with binary profile, the height *h* of the planes 6 is 0.15µm, the distance *d* between the depressions 5 is 1µm and said depressions 5 are located at the angle *α*=30° toward a selected direction. The areas 75 and 76 consist of diffractive gratings with a binary profile with the same height *h* of the planes 6 and the same distance d between the depressions 5, only the depressions 5 are at different angle - respectively *α*=0° and *α*= -30°.

This optical device can be formed on a metal surface or can be made of polymer with a metal or dielectric coating. When illuminated with white light the observer can see at reflection a three-dimensional image with colours of the particular areas changing according to the observation angle under a pre-set algorithm.

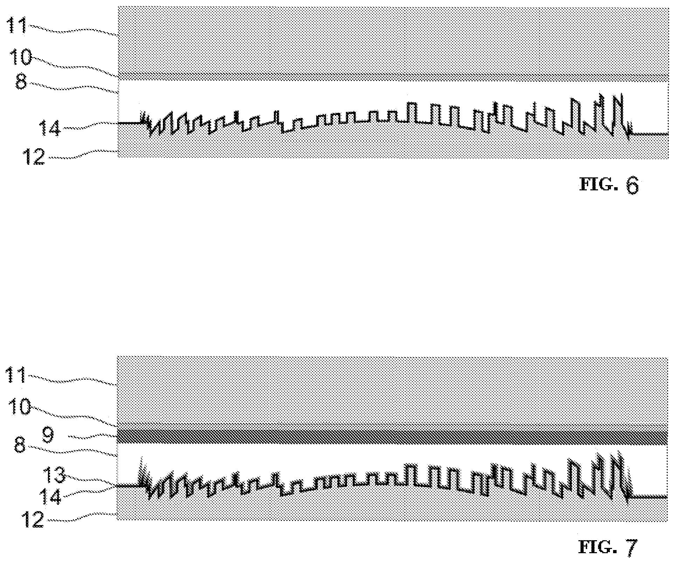

In one preferred embodiment shown in Fig. 6 the optical variable device is formed in a transparent embossible polymer layer 8. A release layer 10 of wax and a base layer 11 of PET are consecutively placed on the optical variable device. A metal coating 14 of aluminium with thickness 0.05 µm is deposited on the optical variable device and a self-adhesive layer 12 is placed over the metal coating 14. This optical device is suitable for use as a security element for ID documents, banknotes and other securities.

In another preferred embodiment, detailed in Fig. 7 the optical variable device is formed in a transparent embossible polymer layer 8. A resistant layer 9 of transparent hard polymer, which protects it from mechanical and chemical impact, a release layer 10 of wax and a base layer 11 of PET are consecutively placed over the embossible polymer layer 8. A dielectric coating 13 of ZnS with thickness 0.06 µm is deposited over the optical variable device, and a metal coating 14 of Al with thickness 0.05 µm is deposited over the dielectric coating 13. A heat-activated adhesive layer 12 is applied over the metal coating 14. This optical variable device is suitable for use as a security element for ID documents, banknotes and other securities.

### INDUSTRIAL APPLICABILITY

A three-dimensional model of the selected object 3 is mathematically generated. A description of the relief of the first relief diffractive structure 1 is generated from said three-dimensional mathematical model and a desired palette of colours of the object 3 is selected. A second relief diffractive structure 4 is generated for each colour of the palette said second relief diffractive structure 4 is mathematically added to the relief of the first relief diffractive structure 1. The resulting relief is recorded by means of existing technologies, for instance through optical lithography, interference lithography, e-beam lithography and others, on a resist layer coated on a glass plate. After developing the resist a physical relief is obtained, which is further copied onto a nickel matrix by electroforming method. Such a nickel matrix can be used for mass production of optical variable devices through conventional technology and conventional equipment for production of relief holograms and security optical devices. The relief from the nickel matrix is embossed onto transparent polymer of hot-stamping foil or foil for labels which may be used for protection and decoration of documents, securities or goods.

A dielectric coating, most frequently ZnS, or metal coating, most frequently Al, may be deposited on the relief by vacuum thermal deposition method. When the coating is dielectric, the optical variable device is transparent and when illuminated with white light may reconstruct a colour image of the object, both at transmission and at reflection. When the coating is of metal, the optical variable device has the highest reflectivity and when illuminated with white light the reconstructed image is observed at reflection. For obtaining more contrast colours and a black colour with low intensity a two-layer coating is deposited - a layer of metal over a layer of dielectric, the latter on the side to the observer.

The nickel matrix may be embossed also directly onto polymer foil with proper coating layers.

To obtain an optical variable device in the form of hot-stamping foil or self-adhesive label, a heat-activating adhesive or a self-adhesive layer is applied on the coating. This optical variable device is adhered onto the substrate which is to be protected, authenticated or decorated (articles, packaging, a document, securities and so on).

When the optical variable device is illuminated with directed white light, the observer can see at reflection or at transmission, depending on the kind of material and/or the coating, a three-dimensional image, which corresponds in shape and colour to the selected object, and pre-set dynamic effects may also be observed.

## Claims

1. An optical variable device, including a first relief diffractive structure (1), consisting of grooves (2) in the form of Fresnel diffractive zones of an arbitrary object (3), and reconstructing a three-dimensional image of said object (3), wherein a second relief diffractive structure (4) is added over the first relief diffractive structure (1), wherein said second relief diffractive structure (4) consisting of areas (7) with borders coinciding with the borders of the areas in the same colour (7') of the object (3), where said areas (7) contain depressions (5) different in shape, size and direction with distance d between the depressions (5), where 1µm ≤*d*≤ 10µm, and the profile of the depressions (5) is formed of *N* in number discrete planes (6) with height *h*ᵢ*,* where 2 ≤ *N* ≤ 7, and 0.02µm≤*h*ᵢ≤ 1µm, and in each area (7) the distance d, the number *N* of the planes (6) and the height *h*ᵢ of the planes (6) are the same, and their values depend on the colour in the relevant area (7') of the object (3).

2. An optical variable device according to claim 1, **characterized in that** the planes (6) form a stepped profile, and the height *s*ᵢ of the steps in each area (7) with the same colour is equal and depends on the colour in the relevant area (7') of the object (3).

3. An optical variable device according to claims 1 and 2, **characterized in that** the depressions (5) have an oblong shape, and the ratio between the length *L* and the width *b* of the depressions (5) is ≥10.

4. An optical variable device according to claims 1 to 3 5 , **characterized in that** it is of metal or of transparent polymer material or of polymer material with metal coating (14).

5. An optical variable device according to claim 4, **characterized in that** a transparent dielectric coating (13) with refractive index *n* ≥ 1.8 is provided over the optical variable device.

6. An optical variable device in according to claims 1 to 5, **characterized in that** it is formed in a transparent embossible polymer layer (8), and a release layer (10) of wax and a base layer (11) of PET are consecutively placed over said embossible layer (8), and a self-adhesive layer (12) is laid on the optical variable device.

7. An optical variable device according to claims 1 to 5, **characterized in that** it is formed in a transparent embossible polymer layer (8), and a resistant layer (9) of transparent hard polymer, a release layer (10) of wax and a base layer (11) of PET are consecutively placed over the embossible layer (8), and a heat-activated adhesive layer (12) is laid on the optical variable device.

## Patentansprüche

1. Ein optisch variables Element, bestehend aus einer ersten diffraktiven Reliefstruktur (1) aus Rillen (2) in der Form von diffraktiven Fresnelzonen eines beliebigen Objekts (3) und aus einem rekonstruierenden dreidimensionalen Bild des Objekts (3), **dadurch gekennzeichnet, dass** auf der ersten diffraktiven Reliefstruktur (1) eine zweite diffraktive Reliefstruktur (4) angebracht ist, **dadurch gekennzeichnet, dass** die zweite diffraktive Reliefstruktur (4) aus Bereichen (7) besteht, die mit den Grenzen der Bereiche gleicher Farbe (7') des Objekts (3) zusammenfallen, wobei diese Bereiche (7) gleiche oder unterschiedliche in Form, Größe oder Richtung Vertiefungen (5) einschließen mit einem Abstand d zwischen den Vertiefungen (5), wobei 1µm ≤d≤ 10µm und die Profile der Vertiefungen (5) aus einer Anzahl von N diskreten Ebenen (6) mit einer Höhe hi, wo 2 ≤ N ≤ 7 und 0.02µm≤ hi ≤ 1µm ist und in jedem Bereich (7) der Abstand d, die Anzahl N der Ebenen (6) und die Höhe hi der Ebenen (6) gleich sind und die Werte von der Farbe (3) des Objekts im jeweiligen Bereich (7') abhängig sind.

2. Ein optisch variables Element nach Anspruch 1, **dadurch gekennzeichnet, dass** die Ebenen (6) ein treppenartig gestuftes Profil bilden, wobei die Höhe si der Stufen in jedem Bereich (7) gleicher Farbe gleich ist und von der Farbe (3) des Objekts im jeweiligen Bereich (7') abhängig ist.

3. Ein optisch variables Element nach Ansprüchen 1 und 2, **dadurch gekennzeichnet, dass** die Vertiefungen (5) eine längliche Form aufweisen, wobei das Verhältnis zwischen der Länge L und der Breite b der Vertiefungen (5) ≥10 ist.

4. Ein optisch variables Element nach Ansprüchen 1 bis 3, **dadurch gekennzeichnet, dass** sie aus Metall oder aus einem transparenten Polymermaterial oder einem Polymermaterial mit Metallbeschichtung (14) ist.

5. Ein optisch variables Element nach Anspruch 4, **dadurch gekennzeichnet, dass** sie mit einer transparenten dielektrischen Beschichtung (13) mit einem Refraktionsindex n ≥ 1.8 auf dem optisch variablen Element versehen ist.

6. Ein optisch variables Element nach Ansprüchen 1 bis 5, **dadurch gekennzeichnet, dass** es in einer transparenten prägbaren Polymerschicht (8) geformt ist, wobei über der prägbaren Schicht (8) aufeinanderfolgend eine Trennschicht (10) aus Wachs und eine Grundschicht (11) aus PET und über dem optisch variablen Element eine selbstklebende Schicht (12) angebracht sind.

7. Ein optisch variables Element nach Ansprüchen 1 bis 5, **dadurch gekennzeichnet, dass** es in einer transparenten prägbaren Polymerschicht (8) geformt ist, wobei über der prägbaren Schicht (8) aufeinanderfolgend eine Schutzschicht (9) aus transparentem Hartpolymer, eine Trennschicht (10) aus Wachs und eine Grundschicht (11) aus PET und über dem optisch variablen Element eine wärmeaktivierte Klebeschicht (12) angebracht sind.

## Revendications

1. Dispositif optique variable, comprenant une première structure diffractive en relief (1), constituée de rainures (2) en forme de zones de diffraction de Fresnel d'un objet arbitraire (3), et reconstituant une image tridimensionnelle dudit objet (3), **caractérisé en ce qu'**une seconde structure diffractive en relief (4) est ajoutée sur la première structure diffractive en relief (1), **en ce que** ladite seconde structure diffractive en relief (4) est constituée de zones (7) avec des bords coïncidant avec les bords des zones de la même couleur (7') de l'objet (3), où lesdites zones (7) contiennent des dépressions (5) de forme, de taille et de direction différentes avec une distance d entre les dépressions (5), où 1µm ≤d≤ 10µm, et le profil des dépressions (5) est formé de N plans discrets (6) de hauteur hi, où 2 ≤ N ≤ 7, et 0,02µm≤ hi ≤ 1µm, et **en ce que** dans chaque zone (7), la distance d, le nombre N des plans (6) et la hauteur hi des plans (6) sont identiques et leurs valeurs dépendent de la couleur de la zone pertinente (7') de l'objet (3).

2. Dispositif optique variable selon la revendication 1, **caractérisé en ce que** les plans (6) forment un profil en escalier, et **en ce que** la hauteur si des marches de chaque zone (7) de la même couleur est égale et dépend de la couleur de la zone pertinente (7') de l'objet (3).

3. Dispositif optique variable selon les revendications 1 et 2, **caractérisé en ce que** les dépressions (5) ont une forme oblongue, et **en ce que** le rapport entre la longueur L et la largeur b des dépressions (5) est ≥10.

4. Dispositif optique variable selon les revendications 1 à 3, **caractérisé en ce qu'**il est en métal, ou en matériau polymère transparent, ou en matériau polymère avec revêtement métallique (14).

5. Dispositif optique variable selon la revendication 4, **caractérisé en ce qu'**un revêtement diélectrique transparent (13) d'indice de réfraction n≥1,8 est prévu sur le dispositif optique variable.

6. Dispositif optique variable selon les revendications 1 à 5, **caractérisé en ce qu'**il est formé dans une couche transparente de polymère gaufrable (8), et **en ce qu'**une couche antiadhésive (10) de cire et une couche de base (11) de PET sont posées l'une après l'autre sur ladite couche gaufrable (8), et **en ce qu'**une couche auto-adhésive (12) est posée sur le dispositif optique variable.

7. Dispositif optique variable selon les revendications 1 à 5, **caractérisé en ce qu'**il est formé dans une couche de polymère transparent gaufrable (8), **en ce qu'**en-dessus de la couche gaufrable (8), sont posées l'une après l'autre une couche protectrice (9) de polymère dur transparent, une couche antiadhésive (10) de cire et une couche de base (11) en PET, et **en ce qu'**une couche adhésive de colle thermoactivable (12) est posée sur le dispositif optique variable.
